# FASCICULE DE BREVET EUROPEEN

(11) **EP 3 776 946 B1**
(45) Date de publication et mention de la délivrance du brevet: **10.01.2024**
(21) Numéro de dépôt: 19720990.1
(22) Date de dépôt: 08.04.2019
(51) Int. Cl.: H04L 1/00, H04L 1/18, H04L 5/00, H04W 72/04

(54) **DISPOSITIFS, SYSTÈMES ET PROCÉDÉS DE COMMUNICATION SANS FIL POUR LE DÉCODAGE DE PAQUETS DE DONNÉES POUR L'ÉTABLISSEMENT DE SERVICES CRITIQUES EN LATENCE**
DRAHTLOSKOMMUNIKATIONSVORRICHTUNGEN, -SYSTEME UND -VERFAHREN ZUR DECODIERUNG VON DATENPAKETEN ZUR EINRICHTUNG LATENZKRITISCHER DIENSTE
WIRELESS COMMUNICATION DEVICES, SYSTEMS AND METHODS, FOR DECODING DATA PACKETS IN ORDER TO ESTABLISH LATENCY-CRITICAL SERVICES

(30) Priorité: 13.04.2018 FR 1853254; 22.06.2018 FR 1855547
(43) Date de publication de la demande: 17.02.2021
(73) Titulaire: Orange, 92130 Issy-les-Moulineaux (FR)
(72) Inventeur: BROWN, Patrick, 92326 CHÂTILLON CEDEX (FR); DEGHEL, Matha, 92326 CHÂTILLON CEDEX (FR); EL AYOUBI, Salah Eddine, 92326 CHÂTILLON CEDEX (FR)
(74) Mandataire: Plasseraud IP
(86) Numéro de dépôt international: PCT/FR2019/050819
(87) Numéro de publication internationale: WO 2019/197767

(56) Documents cités:
- EP-A1- 0 863 621
- WO-A1-2018/086707
- US-A1- 2018 123 765
- Jiawei Ren ET AL: "Complex Step-Shape Binary Offset Carrier Modulation for a Unitary Analytical Framework of GNSS Signals", Wireless Personal Communications, 1 octobre 2013 (2013-10-01), pages 1915-1934, XP055525511, Boston DOI: 10.1007/s11277-013-1113-0 Extrait de l'Internet: URL:http://complextoreal.com/wp-content/up loads/2013/01/CDMA.pdf [extrait le 2019-02-14]
- REN BIN ET AL: "Pattern matrix design of PDMA for 5G UL applications", CHINA COMMUNICATIONS, vol. 13, no. Supplement2, 29 février 2016 (2016-02-29), pages 159-173, XP011639770, ISSN: 1673-5447, DOI: 10.1109/CC.2016.7833470

## Description

### Domaine technique

La présente invention concerne le domaine du décodage de paquets de données transmis sur des ressources d'un canal radio de liaison montante à accès multiple basé sur la contention sans réservation préalable des ressources. Plus précisément, il concerne des dispositifs, systèmes et procédés de communication sans fil pour l'établissement de services critiques en latence.

### Technique antérieure

La norme IMT-2020 définit la structure de la cinquième génération des réseaux mobiles. Cette norme est prévue pour s'articuler autour de plusieurs usages majeurs dont les services critiques en latence telles que les communications dites ultra-fiables et à faible latence (URLLC pour « ultra-Reliable Low Latency Communication » en langue anglaise). Les services critiques en latence regroupent toutes les applications nécessitant une réactivité extrêmement importante ainsi qu'une garantie très forte de transmission des paquets. Ces besoins se retrouvent principalement dans les transports (par exemple, véhicules autonomes, drones), dans la médecine (par exemple, téléchirurgie via des robots médicaux) et, de manière générale, dans les domaines de la numérisation de l'industrie.

En pratique, une latence de seulement 1 ms peut être requise pour les services critiques en latence. A titre de comparaison, la latence sur un réseau mobile de quatrième génération est de l'ordre de 50 à 100 ms. Pour rappel, la latence correspond au temps de retard qui peut être imputé au réseau cellulaire lui-même entre deux sources.

Il est envisagé que de tels services critiques en latence établis entre une station de base et de nombreuses stations mobiles puissent être mis en oeuvre via un canal radio à accès multiple basé sur la contention sans réservation préalable des ressources du canal.

Dans ce cas, la station de base devra être capable de décoder les paquets de données associés à ces nombreuses stations mobiles, tout en respectant les contraintes de latence des services critiques en latence. Toutefois, à ce jour, les contraintes de latence des services critiques en latence ne permettent pas de supporter un grand nombre de stations mobiles. En effet, certains systèmes actuels nécessitent de supporter une charge très faible, par exemple, en limitant le nombre de stations mobiles ou en limitant leur taux d'émission. Par ailleurs, d'autres systèmes sont inefficaces, en ce qu'ils nécessitent l'utilisation d'un très grand nombre de ressources.

EP 0863 621 A1 (ALSTHOM CGE ALCATEL [FR]) (1998-09-09) divulgue un procédé de communication mis en oeuvre dans un système de transmission à ressource partagée. Des stations de base et des terminaux forment, entre autres, le système. En particulier, le système du document D1 consiste à émettre au moins deux paquets de données identiques sans attendre d'accusé de réception entre l'émission de ces paquets de données. Le système peut employer ALOHA (technique à accès multiple basé sur la contention sans réservation préalable de ressources) ou CDMA ou autres techniques de transmission.

Jiawei Ren ET AL: "Complex Step-Shape Binary Offset Carrier Modulation for a Unitary Analytical Framework of GNSS Signals",Wireless Personal Communications, 1 octobre 2013 (2013-10-01), pages 1915-1934, Boston DOI: 10.1007/s11277-013-1113-0, divulgue un procédé dans un système à accès multiple par répartition en code (ou « Code division multiple access » CDMA en anglais) qui utilise des séquences LSFR (« linear feedback shift register »). Plusieurs copies d'un paquet de données sont transmisses.

Ainsi, il convient de proposer une solution permettant de faciliter le décodage par la station de base dans le cadre de l'établissement de services critiques en latence, tout en supportant un nombre élevé de stations mobiles.

### Résumé de l'invention

La présente invention vise donc à résoudre le problème précité. L'invention est définie par les revendications indépendantes. Les revendications dépendantes définissent des réalisations avantageuses.

Pour cela, dans un premier aspect de l'invention, il est proposé un système de communication sans fil comprenant au moins une première station de base. Le système comprend également une pluralité de stations mobiles, chaque station mobile étant configurée pour établir un service critique en latence avec la première station de base. Enfin, le système comprend aussi un canal de liaison montante à accès multiple basé sur la contention sans réservation préalable de ressources, le canal de liaison montante comprenant une pluralité de ressources. Selon l'invention, le système de communication est configuré de telle sorte que chaque station mobile est associée à une séquence propre, chaque séquence définissant une partie de la pluralité de ressources du canal de liaison montante. Par ailleurs, chaque station mobile est, en outre, configurée pour transmettre à la première station de base, une pluralité de copies d'un paquet de données en fonction de la séquence associée. Enfin, la première station de base est configurée pour décoder, pour chaque station mobile, au moins une ressource en fonction de la séquence associée.

Un avantage de l'invention est que grâce à la connaissance des ressources dans lesquelles chaque station mobile va émettre, il est possible de faciliter l'opération de décodage de la station de base, et ce, tout en respectant les contraintes de latence des services critiques en latence. En outre, l'invention permet de respecter les contraintes de latence des services critiques en latence dans les systèmes où la charge est élevée.

Selon une première mise en oeuvre du premier aspect de l'invention, chaque station mobile comprend une première mémoire stockant la séquence associée, la séquence associée étant prédéterminée. En outre, la première station de base comprend une deuxième mémoire stockant la séquence associée à chaque station mobile.

Avec une telle mise en oeuvre, il est possible d'utiliser directement l'ensemble des stations mobiles et une première station de base lors de la mise en service du système.

Selon une deuxième mise en oeuvre du premier aspect de l'invention, la première station de base est, en outre, configurée pour déterminer, pour chaque station mobile, la séquence associée, et pour transmettre, à chaque station mobile, la séquence associée. Par ailleurs, chaque station mobile est, en outre, configurée pour recevoir, en provenance de la première station de base, la séquence associée.

Avec une telle mise en oeuvre, il est possible de définir dynamiquement les séquences en fonction de l'environnement du système.

Dans un premier exemple de la deuxième mise en oeuvre du premier aspect de l'invention, la première station de base est, en outre, configurée pour déterminer aléatoirement la séquence associée à chaque station mobile.

Avec une telle mise en oeuvre, il est possible d'augmenter la probabilité de décodage de la première station de base.

Dans un deuxième exemple de la deuxième mise en oeuvre du premier aspect de l'invention, la première station de base est configurée pour déterminer la séquence associée à chaque station mobile selon un procédé de détermination de séquences respectant au moins une condition dans laquelle une seule ressource est commune entre deux séquences.

Ainsi, le respect de cette condition pour déterminer les séquences propres aux stations mobiles, permet de minimiser la probabilité que les émissions des stations mobiles selon leur séquence respective entrent en collision.

Dans un troisième exemple de la deuxième mise en oeuvre du premier aspect de l'invention, le système comprend, en outre, une deuxième station de base du même type que la première station de base. Par ailleurs, le système est, en outre, configuré de telle sorte que, lors d'un transfert du canal de liaison montante entre la première station de base et la deuxième station de base, pour au moins une station mobile, la première station de base est, en outre configurée, pour transmettre à la deuxième station de base, la séquence associée à la station mobile.

Avec une telle mise en oeuvre, il est possible, pour une station mobile, d'utiliser la même séquence après un changement de cellule dans le système.

Selon une troisième mise en oeuvre du premier aspect de l'invention, le système est, en outre, configuré de telle sorte que la première station de base est, en outre, configurée pour être synchronisée avec la pluralité de stations mobiles. Par ailleurs, la pluralité de stations mobiles est, en outre, configurée pour définir un temps de transmission cyclique prédéterminé.

Avec une telle mise en oeuvre, il est possible de planifier le décodage à la fin de chaque cycle de transmission.

Selon une quatrième mise en oeuvre du premier aspect de l'invention, chaque station mobile est, en outre, configurée pour définir un temps de transmission acyclique. Par ailleurs, le système est, en outre, configuré de telle sorte que chaque station mobile est, en outre, configurée pour réaliser la transmission de la pluralité de copies du paquet de données dans le cadre d'une pluralité d'intervalles de temps ayant une durée prédéterminée. Par la suite, la première station de base est, en outre, configurée pour stocker les paquets de données reçus sur l'ensemble des ressources du canal de liaison montante, et pour réaliser le décodage, dans un intervalle de temps courant, à partir des paquets de données reçus pendant la durée prédéterminée précédant l'intervalle de temps courant.

Avec une telle mise en oeuvre, il est possible de prendre en considération des transmissions non ordonnées des stations mobiles.

Selon une cinquième mise en oeuvre du premier aspect de l'invention, le système est, en outre, configuré de telle sorte que des ressources du canal de liaison montante sont réservées. Par ailleurs, la première station de base est, en outre, configurée pour recevoir, en provenance de la pluralité de stations mobiles, sur les ressources réservées du canal de liaison montante, au moins un code de transmission, et pour déterminer, à partir du code de transmission reçu, la station mobile pour laquelle transmission subséquente est prévue. Par la suite, chaque station mobile est, en outre, configurée pour transmettre à la première station de base, sur les ressources réservées du canal de liaison montante, avant la transmission de la pluralité de copies du paquet de données, le code de transmission reçu.

Avec une telle mise en oeuvre, il est possible de prévenir la première station de base de l'occurrence de transmissions à venir.

Selon une sixième mise en oeuvre du premier aspect de l'invention, le système est, en outre, configuré de telle sorte que la première station de base est, en outre, configurée pour décoder, pour chaque station mobile, une combinaison de tout ou partie des ressources de la séquence associée.

Avec une telle mise en oeuvre, il est possible d'utiliser plusieurs copies d'un même paquet de données pour réussir à le décoder.

Selon une sixième mise en oeuvre du premier aspect de l'invention, le système est, en outre, configuré de telle sorte que la première station de base est, en outre, configurée pour appliquer une technique d'annulation d'interférence successive en fonction de la séquence associée, après le décodage.

Avec une telle mise en oeuvre, il est possible de soustraire des ressources en collision les paquets de données qui ont été décodés avec succès.

Dans un deuxième aspect de l'invention, il est proposé une station de base pour l'établissement d'un service critique en latence avec une pluralité de stations mobiles, chaque station mobile étant configurée pour communiquer avec la station de base via un canal de liaison montante à accès multiple basé sur la contention sans réservation préalable de ressources, le canal de liaison montante comprenant une pluralité de ressources. Selon l'invention, la station de base comprend une unité de calcul pour décoder, pour chaque station mobile, au moins une ressource en fonction d'une séquence propre associée. En particulier, la séquence associée définit, une partie de la pluralité de ressources du canal de liaison montante, et les ressources sur lesquelles chaque station mobile est, en outre, configurée pour transmettre à la station de base, une pluralité de copies d'un paquet de données.

Selon une première mise en oeuvre du deuxième aspect de l'invention, la station de base comprend, en outre, une mémoire stockant la séquence associée à chaque station mobile.

Selon une deuxième mise en oeuvre du deuxième aspect de l'invention l'unité de calcul est, en outre, configurée pour déterminer, pour chaque station mobile, la séquence associée, et la station de base comprend, en outre, une unité de transmission pour transmettre, à chaque station mobile, la séquence associée.

Selon un mode particulier du deuxième aspect de l'invention, l'unité de calcul est, en outre, configurée pour déterminer la séquence associée à chaque station mobile selon un procédé de détermination de séquences respectant au moins une condition dans laquelle une seule ressource est commune entre deux séquences.

Dans un troisième aspect de l'invention, il est proposé une station mobile pour l'établissement d'un service critique en latence avec une station de base via un canal de liaison montante à accès multiple basé sur la contention sans réservation préalable de ressources, le canal de liaison montante comprenant une pluralité de ressources. Selon l'invention, la station mobile comprend une unité de transmission pour transmettre à la station de base, une pluralité de copies d'un paquet de données en fonction d'une séquence propre associée, la séquence associée définissant une partie de la pluralité de ressources du canal de liaison montante.

Dans un quatrième aspect de l'invention, il est proposé un procédé de communication sans fil, mis en oeuvre par une station de base, pour l'établissement d'un service critique en latence avec une pluralité de stations mobiles, chaque station mobile étant configurée pour communiquer avec la station de base via un canal de liaison montante à accès multiple basé sur la contention sans réservation préalable de ressources, le canal de liaison montante comprenant une pluralité de ressources. Selon l'invention, les étapes suivantes sont mises en oeuvre :
- associer chaque station mobile à une séquence propre définissant une partie de la pluralité de ressources du canal de liaison montante,
- recevoir, de chaque station mobile, une pluralité de copies d'un paquet de données en fonction de la séquence associée, et
- décoder, pour chaque station mobile, au moins une ressource en fonction de la séquence associée.

Selon un mode de réalisation particulier, une séquence propre à chaque station mobile est déterminée selon un procédé de détermination de séquences respectant au moins une condition dans laquelle une seule ressource est commune entre deux séquences.

Ainsi, les séquences sont déterminées de telle sorte que la probabilité que les émissions des stations mobiles selon leur séquence respective entrent en collision soit minimisée.

Dans un exemple de réalisation d'une telle détermination de séquences, le procédé de détermination de séquences détermine un nombre n1*n2 de séquences par la combinaison d'un premier ensemble de n1 séquences comportant s ressources choisies parmi un nombre m=n/k de ressources et respectant la condition dans laquelle une seule ressource est commune entre deux séquences, à un deuxième ensemble de n2=k*k séquences comportant s ressources parmi un nombre k*s de ressources pour composer des séquences comportant s ressources parmi n ressources, où k est un nombre premier supérieur ou égal à s-1.

Ce procédé permet d'obtenir, de façon simple, un grand nombre de séquences propres pour un nombre de ressources important et respectant la condition dans laquelle une seule ressource est commune entre deux séquences.

### Brève description des dessins

D'autres caractéristiques et avantages de l'invention seront mieux compris à la lecture de la description qui va suivre et en référence aux dessins annexés, donnés à titre illustratif et nullement limitatif.
La **figure 1** représente un système selon l'invention.
La **figure 2** représente une mise en oeuvre des ressources du canal de liaison montante de la **figure 1****,** et quatre séquences de ressources.
La **figure 3** représente un ordinogramme d'un procédé selon l'invention.
Les figures 4a, 4b et 4c illustrent un exemple de détermination de séquences propres selon un procédé de détermination de séquences d'un mode de réalisation de l'invention

Pour des raisons de clarté, les éléments représentés ne sont pas à l'échelle les uns par rapport aux autres, sauf mention contraire.

### Description des modes de réalisation

Le principe général de l'invention est basé sur deux aspects. Tout d'abord, chaque station mobile transmet plusieurs copies d'un même paquet de données sur un canal de liaison montante à accès multiple basé sur la contention sans réservation préalable de ressources. Ensuite, pour une station mobile donnée, les copies d'un paquet de données sont transmises sur des ressources identifiées du canal, selon une séquence connue de la station de base. Ainsi, pour chaque station mobile, la station de base sait dans quelles ressources du canal regarder pour réaliser son décodage de manière facilitée.

Dans la description, l'invention sera décrite en référence aux communications URLLC (« ultra-Reliable Low Latency Communication » en langue anglaise) telles qu'envisagées dans la cinquième génération des réseaux mobiles. Toutefois, l'invention est également applicable de manière plus générale aux services critiques en latence.

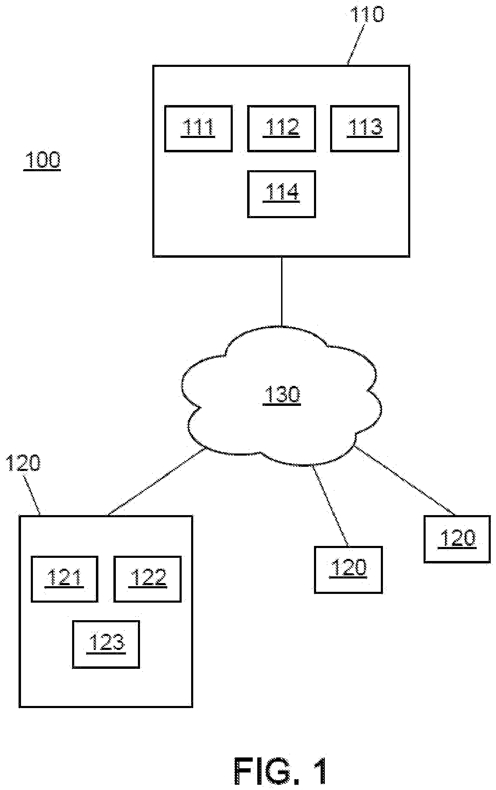

La **figure 1** illustre un système **100** de communication sans fil selon l'invention. Le système **100** comprend une station de base **110,** plusieurs stations mobiles **120** et un canal radio de liaison montante **130** à accès multiple basé sur la contention sans réservation préalable de ressources. Dans une mise en oeuvre particulière, le système **100** comprend plusieurs stations de base **110.**

Dans l'exemple de la **figure 1****,** la station de base **110** comprend au moins, une unité de transmission **111** et une unité de réception **112.** Dans un exemple, l'unité de transmission **111** est un émetteur radio et l'unité de réception **112** est un récepteur radio.

Dans l'exemple de la **figure 1****,** chaque station mobile **120** comprend au moins, une unité de transmission **121** et une unité de réception **122.** Dans un exemple, l'unité de transmission **121** est un émetteur radio et l'unité de réception **122** est un récepteur radio. En outre, chaque station mobile **120** est configurée pour établir un service critique en latence avec la station de base **110.**

Dans l'exemple de la **figure 1****,** le canal de liaison montante **130** comprend une pluralité de ressources radio. Dans un exemple, les ressources du canal sont des ressources bidimensionnelles temps-fréquences comprenant une pluralité de durée de symboles dans une dimension temporelle et une pluralité de sous-porteuses dans une dimension fréquentielle. Dans un autre exemple, les ressources sont des fréquences porteuses, des intervalles de temps ou des codes orthogonaux.

Dans la **figure 1****,** lorsque le système **100** est en opération, ce dernier est configuré de telle sorte que chaque station mobile **120** est associée à une séquence de ressources du canal de liaison montante **130,** qui lui est propre. En outre, chaque séquence définit une partie de la pluralité de ressources du canal de liaison montante **130.** Le caractère propre de la séquence de ressources associée à une station mobile 120 implique que chaque station mobile 120 est associée à une séquence particulière de ressources. En outre, cela couvre également le fait que plusieurs stations mobiles 120 soient associées à la même séquence particulière de ressources.

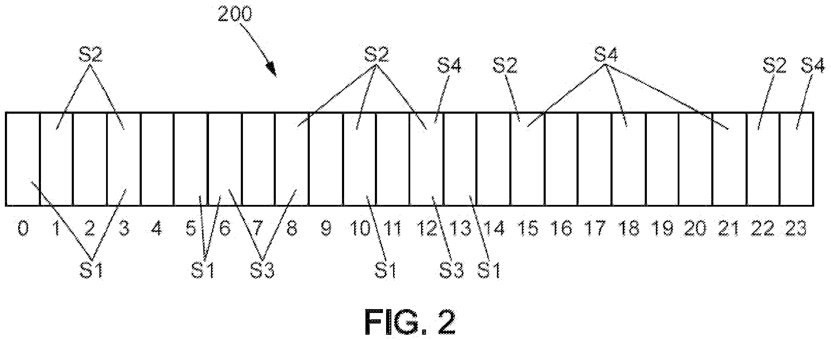

La **figure 2** illustre un exemple de ressources **200** du canal de liaison montante **130** et quatre séquences de ressources **S1, S2, S3** et **S4,** définis selon l'invention. La séquence **S1** comprend les ressources 0, 3, 5, 6, 10 et 13. La séquence **S2** comprend les ressources 1, 3, 8, 10, 12, 15 et 22. La séquence **S3** comprend les ressources 6, 8 et 12. Enfin, la séquence **S4** comprend les ressources 12, 15, 18, 21 et 23. Dans l'exemple de la figure 2, on note que les séquences **S1, S2, S3** et **S4** ne comprennent pas le même nombre de ressources. Toutefois, dans une mise en oeuvre particulière, tout ou partie des séquences comprend le même nombre de ressources. En outre, dans l'exemple de la figure 2, on note que certaines ressources sont en commun entre les séquences. Il s'agit, par exemple, de la ressource 6 que l'on retrouve dans les séquences **S1** et **S3,** ou encore de la ressource 15 que l'on retrouve dans les séquences **S2** et **S4.** Toutefois, dans une mise en oeuvre particulière, lorsque le nombre de ressources le permet, chaque séquence définit une liste unique de ressources.

Dans une première mise en oeuvre particulière de l'invention, la séquence associée à chaque station mobile **120** est prédéterminée. Par exemple, la séquence associée à chaque station mobile **120** est prédéterminée lors de la mise en service ( « commissioning » en langue anglaise) de la station mobile **120** et/ou de la station de base **110.** Dans cette première mise en oeuvre, chaque station mobile **120** comprend une première mémoire **123** stockant la séquence associée. En outre, la station de base **110** comprend une deuxième mémoire **113** stockant la séquence associée à chaque station mobile **120.**

Dans une deuxième mise en oeuvre particulière de l'invention, la séquence associée à chaque station mobile **120** est déterminée par la station de base **110.** Dans cette mise en oeuvre, la station de base **110** comprend une unité de calcul **114** pour déterminer, pour chaque station mobile **120,** la séquence associée. Dans un exemple, l'unité de calcul **114** est un processeur. En outre, l'unité de transmission **111** de la station de base **110** est configurée pour transmettre, à chaque station mobile **120,** la séquence associée. Par ailleurs, l'unité de réception **122** de chaque station mobile **120** est, en outre, configurée pour recevoir, en provenance de la station de base **110,** la séquence associée.

Dans un exemple de la deuxième mise en oeuvre particulière, l'unité de calcul **114** de la station de base **110** est, en outre, configurée pour déterminer aléatoirement la séquence associée à chaque station mobile **120.**

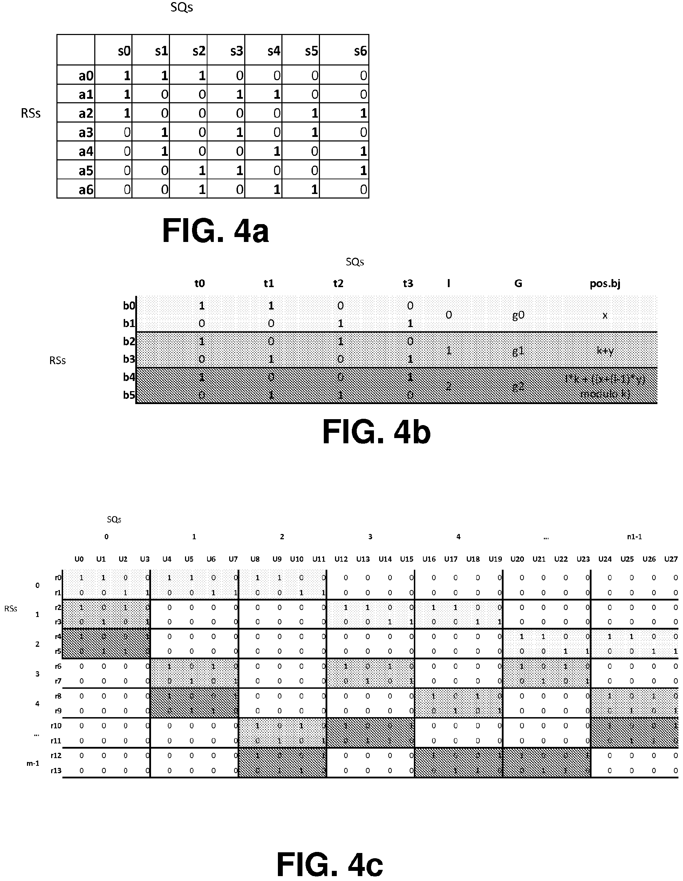

Dans un autre exemple de la deuxième mise en oeuvre, l'unité de calcul 114 de la station de base **110** est, en outre, configurée pour déterminer la séquence associée à chaque station mobile **120** selon un procédé de détermination de séquences respectant au moins une condition dans laquelle une seule ressource est commune entre deux séquences. Un tel procédé de détermination de séquences est décrit ultérieurement en référence aux figures 4a à 4c.

Dans un autre exemple de la deuxième mise en oeuvre particulière, on envisage le cas de figure ou le système **100** est un système de communication cellulaire, dans lequel il est prévu un processus faisant en sorte qu'une station mobile **120** puisse changer de canal radio en maintenant une communication en cours. Un tel processus de transfert de canal est couramment appelé « handover» en langue anglaise. Dans ce cas de figure, le système **100** comprend au moins deux stations de base **110** qui sont interconnectées, par exemple, via une interface de réseau du système **100.** Par ailleurs, le système **100** est, en outre, configuré de telle sorte que, lors d'un transfert du canal de liaison montante **130** entre une première station de base **110** et une deuxième station de base **110,** pour au moins une station mobile **120,** la première station de base **110** est, en outre configurée, pour transmettre à la deuxième station de base **110,** la séquence associée à la station mobile **120.**

De retour à la **figure 1****,** chaque station mobile **120** est, en outre, configurée pour transmettre à la station de base **110,** une pluralité de copies d'un paquet de données en fonction de la séquence associée. Dans un exemple, en référence à la **figure 2****,** une station mobile **120** associée à la séquence **S2** transmettra au moins deux copies d'un paquet de données sur au moins deux ressources parmi les ressources 1, 3, 8, 10, 12, 15 et 22. Dans une mise en oeuvre de cet exemple, la station mobile **120** associée à la séquence **S2** transmettra sept copies d'un paquet de données en utilisant l'ensemble des ressources 1, 3, 8, 10, 12, 15 et 22.

Dans la **figure 1****,** la station de base **110** est configurée pour décoder, pour chaque station mobile **120,** au moins une ressource **200** en fonction de la séquence associée. Dans l'exemple mentionné ci-dessus, la station de base **110** sait qu'une station mobile **120** est associée à la séquence **S2,** de sorte que la station de base **110** va décoder au moins l'une des ressources 1, 3, 8, 10, 12, 15 et 22. Ainsi, pour la station mobile **120** de l'exemple, il ne sera pas nécessaire de décoder l'ensemble des ressources **200** du canal de liaison montante **130.**

Dans une mise en oeuvre particulière, la station de base **110** est, en outre, configurée pour décoder, pour chaque station mobile **120,** une combinaison de tout ou partie des ressources **200** de la séquence associée. Cette mise en oeuvre peut être nécessaire lorsque les ressources de séquence associée à une station mobile **120** sont en collisions avec des paquets de données d'autres stations mobiles **120.** Cela signifie qu'il n'a pas été possible de décoder le paquet de données à partir de l'une des ressources mentionnée dans la séquence associée à une station mobile **120.**

Dans une autre mise en oeuvre particulière, la station de base **110** est, en outre, configurée pour appliquer une technique d'annulation d'interférence successive en fonction de la séquence associée, après le décodage. Ainsi, lorsqu'un paquet de données d'une station mobile **120** est décodé, les copies du paquet de données sont soustraites des ressources dans lesquelles elles ont été transmises. Il est alors possible de débloquer des cas de collisions sur une ou plusieurs de ces ressources.

Dans l'invention, il est également envisagé les cas de figure où les stations mobiles **120** transmettent les copies de paquets de données dans un mode de transmission cyclique ou dans un mode de transmission acyclique.

Dans le cas de figure où la transmission est cyclique, la station de base **110** est, en outre, configurée pour être synchronisée avec les stations mobiles **120.** Dans un exemple, la station de base **110** et les stations mobiles **120** sont synchronisées à une horloge du système 100. Par ailleurs, les stations mobiles **120** sont, en outre, configurées pour définir un temps de transmission cyclique prédéterminé. Ainsi, à chaque cycle de transmission, les stations mobiles **120** sont autorisées à transmettre les copies de leurs paquets de données. Dans un exemple, le temps de transmission cyclique prédéterminé correspond à une pluralité d'un temps unitaires de transmission, la durée d'un temps unitaire étant choisie parmi 0,125 ms ; 0,25 ms ;0,5 ms ou 1 ms. Toutefois, d'autres valeurs peuvent être envisagées, tant qu'elles sont conformes à l'établissement de services critiques en latence.

Dans le cas de figure où la transmission est acyclique, chaque station mobile **120** est, en outre, configurée pour réaliser la transmission de la pluralité de copies du paquet de données dans le cadre d'une pluralité d'intervalles de temps (TTI pour « transmission time interval » en langue anglaise) ayant une durée prédéterminée. Dans un exemple, la durée de la pluralité d'intervalles de temps est choisie parmi 2 à 5 TTI. Toutefois, d'autres valeurs peuvent être envisagées, tant qu'elles sont conformes à l'établissement de services critiques en latence. Par ailleurs, la station de base **110** est, en outre, configurée pour stocker les paquets de données reçus sur l'ensemble des ressources du canal de liaison montante **130.** Enfin, la station de base **110** est, en outre, configurée pour réaliser le décodage, dans un intervalle de temps courant, à partir des paquets de données reçus pendant la durée prédéterminée précédant l'intervalle de temps courant. Ainsi, il est possible, grâce à un mécanisme de décodage glissant, de prendre en considération les transmissions acyclique des stations mobiles **120.**

L'invention prévoit également un mécanisme supplémentaire pour faciliter le décodage, dans le mode de transmission cyclique comme dans le mode de transmission acyclique.

Dans le mécanisme selon l'invention, chaque station mobile **120** utilise un code unique de transmission qui identifie une transmission subséquente de la station mobile **120.** Le code unique de transmission est transmis à la station de base sur des ressources réservées du canal de liaison montante **130.** Pour mettre en oeuvre ce mécanisme, chaque station mobile **120** est, en outre, configurée pour transmettre à la station de base **110,** sur les ressources réservées du canal de liaison montante **130,** avant la transmission des copies du paquet de données, le code de transmission reçu. Par ailleurs, la station de base **110** est, en outre, configurée pour recevoir, en provenance des stations mobiles **120,** sur les ressources réservées du canal de liaison montante **130,** au moins un code de transmission. Enfin, la station de base **110** est, en outre, configurée pour déterminer, à partir du code de transmission reçu, la station mobile **120** pour laquelle transmission subséquente est prévue. Par la suite, le décodage est réalisé comme mentionné plus haut.

Dans une première mise en oeuvre particulière du mécanisme, le code de transmission associé à chaque station mobile **120** est prédéterminé. Par exemple, le code de transmission associé à chaque station mobile **120** est prédéterminé lors de la mise en service ( « commissioning » en langue anglaise) de la station mobile **120** et de la station de base **110.** Dans cette première mise en oeuvre, la première mémoire **123** de chaque station mobile **120** stocke le code de transmission associé. En outre, la deuxième mémoire **113** de la station de base **110** stocke le code de transmission associé à chaque station mobile **120.**

Dans une deuxième mise en oeuvre particulière du mécanisme, le code de transmission associé à chaque station mobile **120** est déterminé par la station de base **110.** Dans cette mise en oeuvre, l'unité de calcul **114** de la station de base **110** est configurée pour déterminer, pour chaque station mobile **120,** le code de transmission associé. En outre, l'unité de transmission **111** de la station de base **110** est configurée pour transmettre, à chaque station mobile **120,** le code de transmission associé. Par ailleurs, l'unité de réception **122** de chaque station mobile **120** est, en outre, configurée pour recevoir, en provenance de la station de base **110,** le code de transmission associé.

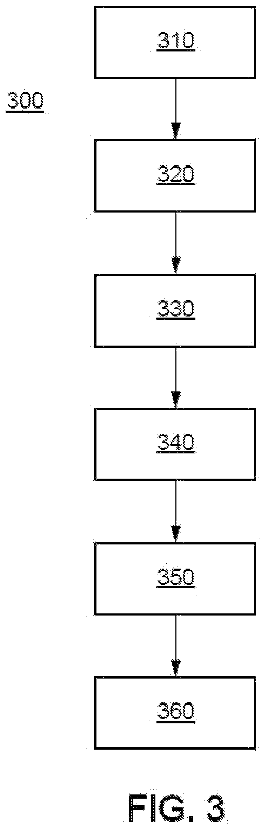

La **figure 3** illustre un procédé **300** de communication sans fil, selon l'invention.

Le procédé **300** consiste tout d'abord à fournir à l'étape **310,** au moins une station de base **110.**

Ensuite, à l'étape **320,** on fournit une pluralité de stations mobiles **120,** dans laquelle chaque station mobile **120** est configurée pour établir un service critique en latence avec la première station de base.

Par ailleurs, à l'étape **330,** on fournit, un canal de liaison montante **130** à accès multiple basé sur la contention sans réservation préalable de ressources, le canal de liaison montante **130** comprenant une pluralité de ressources **200.**

Par la suite, à l'étape **340,** on associe chaque station mobile à une séquence propre définissant une partie de la pluralité de ressources du canal de liaison montante, comme mentionné plus haut.

Ensuite, à l'étape **350,** on transmet, par chaque station mobile, à la station de base, une pluralité de copies d'un paquet de données en fonction de la séquence associée, comme mentionné plus haut. La station de base reçoit donc de chaque station mobile, une pluralité de copies d'un paquet de données en fonction de leur séquence associée.

Enfin, à l'étape **360,** on décode, par la station de base, pour chaque station mobile, au moins une ressource en fonction de la séquence associée.

Les figures 4a, 4b et 4c illustrent les étapes d'un exemple de réalisation d'un procédé de détermination de séquences propre à chaque station mobile. Dans un mode de réalisation de l'invention, ce procédé est mis en oeuvre par la station de base pour déterminer une séquence propre par station mobile afin de le leur transmettre.

Dans un autre mode de réalisation, ces séquences sont prédéterminées en utilisant ce procédé, et sont mises en mémoire dans leur station mobile respective et dans la station de base.

Ce procédé de détermination de séquences détermine un nombre n1*n2 de séquences par la combinaison d'un premier ensemble de n1 séquences comportant s ressources choisies parmi un nombre m=n/k de ressources et respectant la condition dans laquelle une seule ressource est commune entre deux séquences, à un deuxième ensemble de n2=k*k séquences comportant s ressources parmi un nombre k*s de ressources pour composer des séquences comportant s ressources parmi n ressources, où k est un nombre premier supérieur ou égal à s-1.

Ainsi, dans une première étape, un ensemble P1= {s0,..., sn1-1} de n1 séquences peut être défini en choisissant de façon exhaustive des séquences de longueur s choisie (s étant le nombre de ressources par séquence) respectant au moins une condition dans laquelle une seule ressource est commune entre deux séquences. Cet ensemble P1 peut être formé à partir d'un petit nombre de ressources. Cette séquence P1 peut aussi être déterminée en procédant de la même façon que pour construire l'ensemble de séquences P2 comme expliqué ci-dessous..

Dans l'exemple illustré à la **figure 4a****,** 7 séquences s0 à s6 (SQs) sont définies sur un nombre de ressources a0 à a6 (RSs) égale à 7. On choisit une longueur de séquence égale à 3 (s=3) dans cet exemple de réalisation. Ces séquences s0 à s6 de l'ensemble P1 sont choisies de telle sorte qu'une seule ressource est commune entre deux séquences de P1.

Les « 1 » représentés dans le tableau de la figure 4a représentent les positions des ressources de chaque séquence. Pour s0 par exemple, on voit verticalement que les 3 ressources associées à la séquence sont les ressources a0, a1 et a2. Pour s3, les ressources associées sont a1, a3 et a5.

Dans une deuxième étape, on choisit un nombre premier k, supérieur ou égale à s-1 pour définir un deuxième ensemble P2 de ressources respectant la condition dans laquelle une seule ressource est commune entre deux séquences. Pour cet ensemble de séquence P2={t0, ..., tn2-1}, le nombre de séquences de longueur s est égal à n2=k*k. Les s ressources de chaque séquence sont choisies parmi k2=k*s ressources parmi n ressources.

Les n2 séquences de P2 sont déterminées de la façon suivante :
Les k*s ressources sont groupés en s groupes, noté g0 à gs-1 de k ressources. Toute séquence de P2 est telles que son I-ième élément est choisi dans le groupe gl (avec l allant de 0 à s-1). Une séquence de P2 occupe donc une et une seule ressource dans chacun des groupes de k ressources. De plus, une séquence de P2 doit aussi respecter la condition dans laquelle une seule ressource est commune entre deux séquences. Une séquence tj=(bj0,...,bjs-1) a son premier élément dans le groupe 0 en position bj0 entre 0 et k-1, son prochain élément dans le groupe 1 en position bj1, entre k et 2*k -1, etc... , son I-ième élément en position bjl entre l*k et l*k+l-1.

Les k*k séquences P2 peuvent être composées de la façon suivante.

Soit la j-ième séquence de P2 avec j=x*k+y et 0<=j<=k*k-1 et où x et y prennent leurs valeurs entre 0 et k-1. Le l-ème élément de la j-ième séquence de P2, l entre 0 et s-1, est égal à :
x (prenant les valeurs de 0 à k-1), si l=0
k+y (y prenant les valeurs de 0 à k-1), si l=1
l*k+((x+(l-1)*y) modulo k), pour l entre 2 et s-1
où h modulo k est le reste de la division euclidienne de h par k. k étant un nombre premier, les séquences ainsi définies ont une et une seule ressource en commun.

En effet, la démonstration suivante montre que si deux éléments sont égaux entre deux séquences, cela veut dire qu'il s'agit de la même séquence. On ne peut donc avoir qu'un seul élément commun entre deux séquences.

Pour démontrer cela, on vérifie que si deux éléments distincts, l1 et l2, sont égaux entre deux séquences j et j', définies respectivement par x et y, x' et y', alors ces deux séquences sont égales, c'est-à-dire que x=x' et y=y'. Rappelons que (a modulo k)=(b modulo k) si et seulement si k divise a-b. De plus puisque k est premier alors k divise a*b si et seulement si k divise a ou k divise b. Enfin si k divise a avec la valeur absolue de a inférieure à k, alors a=0.

On considère quatre cas :
- l1 =0 et l2=1 :
   dans ce cas x=x' et k+y=k+y' donc y=y' et donc j=j'.
- l1 =0 et l2>1
   dans ce cas x=x' et k divise x+(l2-1)*y-(x'+(l2-1)*y')₌(l2-1)*(y-y'). Puisque k est premier, k doit diviser soit (12-1) soit (y-y'). Ces deux nombres étant de valeur absolue plus petits que k, alors soit l2-1=0 soit y-y'=0. Puisque l2>1, y-y'=0 et donc j=j'.
- l1=1 et l2>1
   dans ce cas y=y' et k divise x+(l2-1)*y-(x'+(l2-1)*y')=x-x'. Puisque k est premier, k doit diviser x-x'. Cette différence étant de valeur absolue plus petite que k, alors x-x'=0 et donc j=j'.
- l1>1 et l2>1
   dans ce cas k divise x+(l1-1)*y-(x'+(l1-1)*y') et k divise x+(l2-1)*y-(x'+(l2-1)*y'). Donc k divise leur différence (l1-l2)*y-(l1-l2)*y'=(l1-l2)*(y-y'). Puisque k est premier, k doit diviser soit (l1-l2) soit (y-y'). Ces deux nombres étant de valeur absolue plus petits que k, alors soit l1-l2=0 soit y-y'=0. Puisque l1 et l2 sont distincts, alors y-y'=0 et donc y=y'. Or k divise x+(l2-1)*y-(x'+(l2-1)*y')=x-x'. Puisque k est premier, k doit diviser x-x'. Cette différence étant de valeur absolue plus petite que k, alors x-x'=0 et donc j=j'.

Ceci démontre que si deux éléments sont égaux dans deux séquences, alors ces deux séquences sont une seule et même séquence. Ainsi deux séquences distinctes ont au plus un élément en commun.

A titre d'exemple illustré à la **figure 4b****,** k est définie avec une valeur égale à 2. On a donc un ensemble P2 de n2=k*k=4 séquences, représentées verticalement. Comme pour l'ensemble P1 illustré à la figure 4a, s représentant le nombre de ressources par séquence est égal à 3. Les valeurs à « 1 » dans une colonne donnent les positions des ressources de la séquence correspondante.

On voit ainsi que le premier élément de la séquence t0 est positionné à la valeur x=0, c'est-à-dire à b0 dans le groupe g0 correspondant à l=0.

Le deuxième élément de la séquence t0 est positionné à la valeur k+y avec y=0, donc à la valeur 2, i.e à la ressource b2 dans le groupe g1 correspondant à l=1.

D'une séquence à l'autre, la valeur de x peut varier toutes les k séquences alors que la valeur de y varie d'une séquence à l'autre à chaque séquence, donc en diagonale comme représenté sur la figure 4b.

Pour le troisième élément de la séquence t0 de la figure 4b, il est positionné à la valeur l*k+((x+(l-1)*y) modulo k), c'est-à-dire ici (avec l=2, k=2, x=0 et y=0) à la valeur 4, i.e la ressource b4.

A partir des ensembles de séquences P1 et P2 respectant la condition dans laquelle une seule ressource est commune entre deux séquences, il est alors possible de former n1*n2 séquences d'un nombre s de ressources respectant cette même condition. A partir de chacune des n1 séquences si=(ai0,...,ais-1) de P1 et des n2 séquences tj=(bj0,...,bjs-1) de P2, on créé n1*n2 séquences uij, de s ressources parmi n, telles que uij=(ai0*k+bj0,...,ail*k-l*k+bjl,...,ais-1*k-(s-1)*k+bjs-1).

Ainsi, le I-ième élément de uij, ail*k-l*k+bjl, est positionné dans un ail-ième sous-groupe de k éléments des n ressources. Avec m=n/k , m groupes de k éléments sont ainsi considérés et notés de g0 à gm-1.

Ainsi, les n1*n2 nouvelles séquences de s ressources parmi n vérifient bien la condition souhaitée d'une seule ressource commune entre deux séquences. En effet, deux séquences ainsi obtenues, ne peuvent avoir qu'un sous-groupe en commun. Les ressources utilisées en commun ne peuvent être que dans ce sous-groupe et ces séquences n'utilisent qu'une ressource par sous-groupe. Elles ne peuvent donc avoir qu'une ressource au maximum en commun.

La **figure 4c** illustre la combinaison des n1 séquences de la figure 4a et des n2 séquences de la figure 4b. On a ainsi n1*n2=7*4=28 séquences (U0 à U27) vérifiant la condition souhaitée. Le nombre de ressources m pour l'ensemble de séquences P1 est tel que m=n/k. Avec k=2, les n ressources (r0 à r13) utilisées pour définir les 28 séquences sont alors au nombre de n=m*k=7*2=14.

On voit sur la figure 4c que la combinaison des n1 et n2 séquences selon le procédé de détermination de séquences de ce mode de réalisation revient à intégrer chacun des 3 groupes g0 à g2 définis dans P2 dans les 3 positions des ressources définis dans P1 pour une séquence. On étend ainsi le nombre de séquences par un facteur 4 (=k*k) horizontalement pour un nombre de ressources étendus d'un facteur 2 (=k).

Ce procédé d'extension peut être réitérer en combinant les séquences définis par ce nouvel ensemble P'1 des n1*n2 séquences avec à nouveau l'ensemble P2 de séquences défini comme expliqué ci-dessus.

On obtient ainsi (n1*n2)*n2 séquences pour n*k ressources qui vérifient toujours la condition d'une seule ressource commune entre deux séquences.

En reprenant les même exemples numériques que ceux illustrés dans les figures 4a à 4c, on pourra alors avoir (n1*n2)*n2=28*4=112 séquences de s=3 ressources parmi n*k=14*2=28 ressources.

Ce procédé permet donc de trouver un grand nombre de séquences de façon simple vérifiant la propriété d'une seule ressource commune entre deux séquences pour un nombre de ressources important.

La présente invention a été décrite et illustrée dans la présente description détaillée et dans les figures. Toutefois, la présente invention ne se limite pas aux formes de réalisation présentées. Ainsi, d'autres variantes et modes de réalisation peuvent être déduits et mis en oeuvre par la personne du métier à la lecture de la présente description et des figures annexées.

Par exemple, le procédé **300** peut être implémenté à partir d'éléments matériel et/ou logiciel. Il peut notamment être mis en oeuvre en tant que programme d'ordinateur comportant des instructions pour son exécution. Le programme d'ordinateur peut être enregistré sur un support d'enregistrement lisible par un processeur. Le support peut être électronique, magnétique, optique ou électromagnétique.

En particulier, l'invention peut être implémentée par des dispositifs comprenant un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Le dispositif peut utiliser un ou plusieurs circuits électroniques dédiés ou un circuit à usage général. La technique de l'invention peut se réaliser sur une machine de calcul reprogrammable (un processeur ou un microcontrôleur par exemple) exécutant un programme comprenant une séquence d'instructions ou sur une machine de calcul dédiée (par exemple, un ensemble de portes logiques comme un FPGA ou un ASIC, ou tout autre module matériel).

Selon un mode de réalisation, le dispositif comprend au moins un support de stockage lisible par ordinateur (RAM, ROM, EEPROM, mémoire flash ou une autre technologie de mémoire, CD-ROM, DVD ou un autre support à disque optique, cassette magnétique, bande magnétique, disque de stockage magnétique ou un autre dispositif de stockage, ou un autre support de stockage non transitoire lisible par ordinateur) codé avec un programme d'ordinateur (c'est-à-dire plusieurs instructions exécutables) qui, lorsqu'il est exécuté sur un processeur ou plusieurs processeurs, effectue les fonctions des modes de réalisation de l'invention, décrits précédemment.

## Revendications

1. Système de communication sans fil (**100**), comprenant :
- au moins une première station de base (**110**),
- une pluralité de stations mobiles (**120**), chaque station mobile étant configurée pour établir un service critique en latence avec la première station de base, et
- un canal de liaison montante (**130**) à accès multiple basé sur la contention sans réservation préalable de ressources, le canal de liaison montante comprenant une pluralité de ressources, dans lequel :
le système de communication est configuré de telle sorte que chaque station mobile est associée à une séquence propre (**S1, S2, S3, S4**), chaque séquence définissant une partie de la pluralité de ressources du canal de liaison montante,
chaque station mobile est, en outre, configurée pour transmettre , à la première station de base, une pluralité de copies d'un paquet de données en fonction de la séquence associée, et
la première station de base est configurée pour décoder, pour chaque station mobile, au moins une ressource en fonction de la séquence associée.

2. Système de communication sans fil selon la revendication 1, dans lequel :
- chaque station mobile comprend une première mémoire (**123**) stockant la séquence associée, la séquence associée étant prédéterminée, et
- la première station de base comprend une deuxième mémoire (**113**) stockant la séquence associée à chaque station mobile.

3. Système de communication sans fil selon la revendication 1, dans lequel :
- la première station de base est, en outre, configurée pour,
déterminer, pour chaque station mobile, la séquence associée, et
transmettre, à chaque station mobile, la séquence associée,
- chaque station mobile est, en outre, configurée pour recevoir, en provenance de la première station de base, la séquence associée.

4. Système de communication sans fil selon la revendication 3, dans lequel la première station de base est, en outre, configurée pour déterminer aléatoirement la séquence associée à chaque station mobile.

5. Système de communication sans fil selon la revendication 3, dans lequel la première station de base est, en outre, configurée pour déterminer la séquence associée à chaque station mobile selon un procédé de détermination de séquences respectant au moins une condition dans laquelle une seule ressource est commune entre deux séquences.

6. Système de communication sans fil selon l'une quelconque des revendications 3 à 5, comprenant, en outre, une deuxième station de base du même type que la première station de base, et dans lequel :
- le système est, en outre, configuré de telle sorte que, lors d'un transfert du canal de liaison montante entre la première station de base et la deuxième station de base, pour au moins une station mobile, la première station de base est, en outre configurée, pour transmettre à la deuxième station de base, la séquence associée à la station mobile.

7. Système de communication sans fil selon l'une quelconque des revendications 1 à 6, en outre, configuré de telle sorte que :
- la première station de base est, en outre, configurée pour être synchronisée avec la pluralité de stations mobiles, et
- la pluralité de stations mobiles est, en outre, configurée pour définir un temps de transmission cyclique prédéterminé.

8. Système de communication sans fil selon l'une quelconque des revendications 1 à 6, dans lequel chaque station mobile est, en outre, configurée pour définir un temps de transmission acyclique, le système étant, en outre, configuré de telle sorte que :
- chaque station mobile est, en outre, configurée pour réaliser la transmission de la pluralité de copies du paquet de données dans le cadre d'une pluralité d'intervalles de temps ayant une durée prédéterminée, et
- la première station de base est, en outre, configurée pour,
stocker les paquets de données reçus sur l'ensemble des ressources du canal de liaison montante, et
réaliser le décodage, dans un intervalle de temps courant, à partir des paquets de données reçus pendant la durée prédéterminée précédant l'intervalle de temps courant.

9. Système de communication sans fil selon l'une quelconque des revendications 1 à 8, en outre, configuré de telle sorte que des ressources du canal de liaison montante sont dédiées à la transmission de codes de transmission et que :
- la première station de base est, en outre, configurée pour,
recevoir, en provenance de la pluralité de stations mobiles, sur les ressources dédiées du canal de liaison montante, au moins un code de transmission, et
déterminer, à partir du code de transmission reçu, la station mobile pour laquelle transmission subséquente est prévue,
- chaque station mobile est, en outre, configurée pour,
transmettre à la première station de base, sur les ressources dédiées du canal de liaison montante, avant la transmission de la pluralité de copies du paquet de données, le code de transmission reçu.

10. Système de communication sans fil selon l'une quelconque des revendications 1 à 9, en outre, configuré de telle sorte que :
- la première station de base est, en outre, configurée pour décoder, pour chaque station mobile, une combinaison de tout ou partie des ressources de la séquence associée.

11. Système de communication sans fil selon l'une quelconque des revendications 1 à 10, en outre, configuré de telle sorte que :
- la première station de base est, en outre, configurée pour appliquer une technique d'annulation d'interférence successive en fonction de la séquence associée, après le décodage.

12. Station de base (**110**) pour l'établissement d'un service critique en latence avec une pluralité de stations mobiles (**120**), chaque station mobile étant configurée pour communiquer avec la station de base via un canal de liaison montante (**130**) à accès multiple basé sur la contention sans réservation préalable de ressources, le canal de liaison montante comprenant une pluralité de ressources, la station de base comprenant :
- une unité de calcul (**114**) pour décoder, pour chaque station mobile, au moins une ressource en fonction d'une séquence propre associée (**S1, S2, S3, S4**),
la séquence associée définissant,
une partie de la pluralité de ressources du canal de liaison montante, et
les ressources sur lesquelles chaque station mobile est, en outre, configurée pour transmettre ,
à la station de base, une pluralité de copies d'un paquet de données

13. Station de base selon la revendication 12, dans laquelle l'unité de calcul est, en outre, configurée pour déterminer, pour chaque station mobile, la séquence associée, la station de base comprenant, en outre, une unité de transmission (**111**) pour transmettre, à chaque station mobile, la séquence associée.

14. Station de base selon la revendication 13, dans laquelle l'unité de calcul est, en outre, configurée pour déterminer la séquence associée à chaque station mobile selon un procédé de détermination de séquences respectant au moins une condition dans laquelle une seule ressource est commune entre deux séquences.

15. Station mobile (**120**) pour l'établissement d'un service critique en latence avec une station de base (**110**) via un canal de liaison montante (**130**) à accès multiple basé sur la contention sans réservation préalable de ressources, le canal de liaison montante comprenant une pluralité de ressources, la station mobile comprenant :
- une unité de transmission (**121**) pour transmettre, à la station de base, une pluralité de copies d'un paquet de données en fonction d'une séquence propre associée à la station mobile, la séquence associée définissant une partie de la pluralité de ressources du canal de liaison montante, l'association entre la station mobile et la séquence associée étant connue de la station de base.

16. Procédé (**300**) de communication sans fil, mis en oeuvre par une station de base, pour l'établissement d'un service critique en latence avec une pluralité de stations mobiles (**120**), chaque station mobile étant configurée pour communiquer avec la station de base via un canal de liaison montante (**130**) à accès multiple basé sur la contention sans réservation préalable de ressources, le canal de liaison montante comprenant une pluralité de ressources, le procédé comprenant les étapes suivantes :
- associer (**340**) chaque station mobile à une séquence propre définissant une partie de la pluralité de ressources du canal de liaison montante,
- recevoir (**350**), de chaque station mobile, une pluralité de copies d'un paquet de données en fonction de la séquence associée, et
- décoder (**360**), pour chaque station mobile, au moins une ressource en fonction de la séquence associée.

17. Procédé selon la revendication 16, dans lequel une séquence propre à chaque station mobile est déterminée selon un procédé de détermination de séquences respectant au moins une condition dans laquelle une seule ressource est commune entre deux séquences.

18. Procédé selon la revendication 17, dans lequel le procédé de détermination de séquences détermine un nombre n1*n2 de séquences par la combinaison d'un premier ensemble de n1 séquences comportant s ressources choisies parmi un nombre m=n/k de ressources et respectant la condition dans laquelle une seule ressource est commune entre deux séquences, à un deuxième ensemble de n2=k*k séquences comportant s ressources parmi un nombre k*s de ressources pour composer des séquences comportant s ressources parmi n ressources, où k est un nombre premier supérieur ou égal à s-1.

## Patentansprüche

1. Drahtloskommunikationssystem (100), umfassend:
- mindestens eine erste Basisstation (110),
- eine Mehrzahl von Mobilstationen (120), wobei jede Mobilstation dazu ausgestaltet ist, einen latenzkritischen Dienst mit der ersten Basisstation einzurichten, und
- einen Uplink-Kanal (130) mit wettbewerbsbasiertem Mehrfachzugriff ohne vorherige Reservierung von Ressourcen, wobei der Uplink-Kanal eine Mehrzahl von Ressourcen umfasst, bei dem:
das Kommunikationssystem so ausgestaltet ist, dass jede Mobilstation einer eigenen Sequenz (S1, S2, S3, S4) zugeordnet ist, wobei jede Sequenz einen Teil der Mehrzahl von Ressourcen des Uplink-Kanals definiert, jede Mobilstation ferner dazu ausgestaltet ist, an die erste Basisstation eine Mehrzahl von Kopien eines Datenpakets in Abhängigkeit von der zugeordneten Sequenz zu übertragen, und die erste Basisstation dazu ausgestaltet ist, für jede Mobilstation mindestens eine Ressource in Abhängigkeit von der zugeordneten Sequenz zu decodieren.

2. Drahtloskommunikationssystem nach Anspruch 1, bei dem:
- jede Mobilstation einen ersten Speicher (123) umfasst, der die zugeordnete Sequenz speichert, wobei die zugeordnete Sequenz vorbestimmt ist, und
- die erste Basisstation einen zweiten Speicher (113) umfasst, der die jeder Mobilstation zugeordnete Sequenz speichert.

3. Drahtloskommunikationssystem nach Anspruch 1, bei dem:
- die erste Basisstation ferner dazu ausgestaltet ist, für jede Mobilstation die zugeordnete Sequenz zu bestimmen, und
an jede Mobilstation die zugeordnete Sequenz zu übertragen,
- jede Mobilstation ferner dazu ausgestaltet ist, von der ersten Basisstation die zugeordnete Sequenz zu empfangen.

4. Drahtloskommunikationssystem nach Anspruch 3, bei dem die erste Basisstation ferner dazu ausgestaltet ist, die jeder Mobilstation zugeordnete Sequenz zufällig zu bestimmen.

5. Drahtloskommunikationssystem nach Anspruch 3, bei dem die erste Basisstation ferner dazu ausgestaltet ist, die jeder Mobilstation zugeordnete Sequenz nach einem Verfahren zur Bestimmung von Sequenzen zu bestimmen, das mindestens eine Bedingung erfüllt, in der eine einzige Ressource zwei Sequenzen gemein ist.

6. Drahtloskommunikationssystem nach einem der Ansprüche 3 bis 5, das ferner eine zweite Basisstation des gleichen Typs wie die erste Basisstation umfasst und bei dem:
- das System ferner so ausgestaltet ist, dass, bei einem Transfer des Uplink-Kanals zwischen der ersten Basisstation und der zweiten Basisstation, für mindestens eine Mobilstation die erste Basisstation ferner dazu ausgestaltet ist, an die zweite Basisstation die der Mobilstation zugeordnete Sequenz zu übertragen.

7. Drahtloskommunikationssystem nach einem der Ansprüche 1 bis 6, das ferner so ausgestaltet ist, dass:
- die erste Basisstation ferner dazu ausgestaltet ist, mit der Mehrzahl von Mobilstationen synchronisiert zu werden, und
- die Mehrzahl von Mobilstationen ferner dazu ausgestaltet ist, eine vorbestimmte zyklische Übertragungszeit zu definieren.

8. Drahtloskommunikationssystem nach einem der Ansprüche 1 bis 6, bei dem jede Mobilstation ferner dazu ausgestaltet ist, eine azyklische Übertragungszeit zu definieren, wobei das System ferner so ausgestaltet ist, dass:
- jede Mobilstation ferner dazu ausgestaltet ist, die Übertragung der Mehrzahl von Kopien des Datenpakets im Rahmen einer Mehrzahl von Zeitintervallen mit einer vorbestimmten Dauer auszuführen, und
- die erste Basisstation ferner dazu ausgestaltet ist, die über sämtliche Ressourcen des Uplink-Kanals empfangenen Datenpakete zu speichern, und
die Decodierung, in einem aktuellen Zeitintervall, ausgehend von den Datenpaketen auszuführen, die während der vorbestimmten Dauer empfangen werden, die dem aktuellen Zeitintervall vorausgeht.

9. Drahtloskommunikationssystem nach einem der Ansprüche 1 bis 8, das ferner so ausgestaltet ist, dass Ressourcen des Uplink-Kanals zur Übertragung von Übertragungscodes vorgesehen sind, und dass:
- die erste Basisstation ferner dazu ausgestaltet ist, von der Mehrzahl von Mobilstationen über die dazu vorgesehenen Ressourcen des Uplink-Kanals mindestens einen Übertragungscode zu empfangen, und
ausgehend von dem empfangenen Übertragungscode die Mobilstation zu bestimmen, für welche die darauffolgende Übertragung vorgesehen ist,
- jede Mobilstation ferner dazu ausgestaltet ist,
an die erste Basisstation über die dazu vorgesehenen Ressourcen des Uplink-Kanals, vor der Übertragung der Mehrzahl von Kopien des Datenpakets, den empfangenen Übertragungscode zu übertragen.

10. Drahtloskommunikationssystem nach einem der Ansprüche 1 bis 9, das ferner so ausgestaltet ist, dass:
- die erste Basisstation ferner dazu ausgestaltet ist, für jede Mobilstation eine Kombination aus allen oder einem Teil der Ressourcen der zugeordneten Sequenz zu decodieren.

11. Drahtloskommunikationssystem nach einem der Ansprüche 1 bis 10, das ferner so ausgestaltet ist, dass:
- die erste Basisstation ferner dazu ausgestaltet ist, eine Technik zur sukzessiven Interferenzunterdrückung in Abhängigkeit von der zugeordneten Sequenz, nach dem Decodieren, anzuwenden.

12. Basisstation (110) zur Einrichtung eines latenzkritischen Dienstes mit einer Mehrzahl von Mobilstationen (120), wobei jede Mobilstation dazu ausgestaltet ist, mit der Basisstation über einen Uplink-Kanal (130) mit wettbewerbsbasiertem Mehrfachzugriff ohne vorherige Reservierung von Ressourcen zu kommunizieren, wobei der Uplink-Kanal eine Mehrzahl von Ressourcen umfasst, wobei die Basisstation umfasst:
- eine Recheneinheit (114), um für jede Mobilstation mindestens eine Ressource in Abhängigkeit von einer zugeordneten eigenen Sequenz (S1, S2, S3, S4) zu decodieren, wobei die zugeordnete Sequenz definiert
einen Teil der Mehrzahl von Ressourcen des Uplink-Kanals und
die Ressourcen, über welche jede Mobilstation ferner entsprechend ihrer Ausgestaltung eine Mehrzahl von Kopien eines Datenpakets an die Basisstation überträgt.

13. Basisstation nach Anspruch 12, bei der die Recheneinheit ferner dazu ausgestaltet ist, für jede Mobilstation die zugeordnete Sequenz zu bestimmen, wobei die Basisstation ferner eine Übertragungseinheit (111) umfasst, um an jede Mobilstation die zugeordnete Sequenz zu übertragen.

14. Basisstation nach Anspruch 13, bei der die Recheneinheit ferner dazu ausgestaltet ist, die jeder Mobilstation zugeordnete Sequenz nach einem Verfahren zur Bestimmung von Sequenzen zu bestimmen, das mindestens eine Bedingung erfüllt, in der eine einzige Ressource zwei Sequenzen gemein ist.

15. Mobilstation (120) zur Einrichtung eines latenzkritischen Dienstes mit einer Basisstation (110) über einen Uplink-Kanal (130) mit wettbewerbsbasiertem Mehrfachzugriff ohne vorherige Reservierung von Ressourcen, wobei der Uplink-Kanal eine Mehrzahl von Ressourcen umfasst, wobei die Mobilstation umfasst:
- eine Übertragungseinheit (121), um an die Basisstation eine Mehrzahl von Kopien
eines Datenpakets in Abhängigkeit von einer der Mobilstation zugeordneten eigenen Sequenz zu übertragen, wobei die zugeordnete Sequenz einen Teil der Mehrzahl von Ressourcen des Uplink-Kanals definiert, wobei die Zuordnung zwischen der Mobilstation und der zugeordneten Sequenz der Basisstation bekannt ist.

16. Verfahren (300) zur Drahtloskommunikation, das von einer Basisstation zur Einrichtung eines latenzkritischen Dienstes mit einer Mehrzahl von Mobilstationen (120) eingesetzt wird, wobei jede Mobilstation dazu ausgestaltet ist, mit der Basisstation über einen Uplink-Kanal (130) mit wettbewerbsbasiertem Mehrfachzugriff ohne vorherige Reservierung von Ressourcen zu kommunizieren, wobei der Uplink-Kanal eine Mehrzahl von Ressourcen umfasst, wobei das Verfahren die folgenden Schritte umfasst:
- Zuordnen (340) jeder Mobilstation zu einer eigenen Sequenz, die einen Teil der Mehrzahl von Ressourcen des Uplink-Kanals definiert,
- Empfangen (350), von jeder Mobilstation, einer Mehrzahl von Kopien eines Datenpakets in Abhängigkeit von der zugeordneten Sequenz, und
- Decodieren (360), für jede Mobilstation, mindestens einer Ressource in Abhängigkeit von der zugeordneten Sequenz.

17. Verfahren nach Anspruch 16, bei dem eine jeder Mobilstation eigene Sequenz nach einem Verfahren zur Bestimmung von Sequenzen bestimmt wird, das mindestens eine Bedingung erfüllt, in der eine einzige Ressource zwei Sequenzen gemein ist.

18. Verfahren nach Anspruch 17, bei dem das Verfahren zur Bestimmung von Sequenzen eine Anzahl n1*n2 von Sequenzen durch die Kombination eines ersten Satzes aus n1 Sequenzen, die s Ressourcen beinhalten, die unter einer Anzahl m=n/k von Ressourcen gewählt sind und die Bedingung erfüllen, in der eine einzige Ressource zwei Sequenzen gemein ist, mit einem zweiten Satz aus n2=k*k Sequenzen, die s Ressourcen unter einer Anzahl k*s von Ressourcen beinhalten, um Sequenzen zu bilden, die s Ressourcen unter n Ressourcen beinhalten, wobei k eine Primzahl größer oder gleich s-1 ist.

## Claims

1. Wireless communication system (100), comprising:
- at least one first base station (110),
- a plurality of mobile stations (120), each mobile station being configured to establish a latency-critical service with the first base station, and
- a contention-based multiple-access uplink channel (130) without prior resource reservation, the uplink channel comprising a plurality of resources, wherein:
the communication system is configured such that each mobile station is associated with a specific sequence (S1, S2, S3, S4), each sequence defining a portion of the plurality of resources of the uplink channel, each mobile station is furthermore configured to transmit a plurality of copies of a data packet to the first base station depending on the associated sequence, and the first base station is configured to decode, for each mobile station, at least one resource depending on the associated sequence.

2. Wireless communication system according to Claim 1, wherein:
- each mobile station comprises a first memory (123) storing the associated sequence, the associated sequence being predetermined, and
- the first base station comprises a second memory (113) storing the sequence associated with each mobile station.

3. Wireless communication system according to Claim 1, wherein:
- the first base station is furthermore configured to determine the associated sequence for each mobile station, and
transmit the associated sequence to each mobile station,
- each mobile station is furthermore configured to receive the associated sequence from the first base station.

4. Wireless communication system according to Claim 3, wherein the first base station is furthermore configured to randomly determine the sequence associated with each mobile station.

5. Wireless communication system according to Claim 3, wherein the first base station is furthermore configured to determine the sequence associated with each mobile station using a method for determining sequences complying with at least one condition whereby a single resource is common between two sequences.

6. Wireless communication system according to any one of Claims 3 to 5, furthermore comprising a second base station of the same type as the first base station, and wherein:
- the system is furthermore configured such that, upon a transfer of the uplink channel between the first base station and the second base station, for at least one mobile station, the first base station is furthermore configured to transmit the sequence associated with the mobile station to the second base station.

7. Wireless communication system according to any one of Claims 1 to 6, furthermore configured such that:
- the first base station is furthermore configured to be synchronized with the plurality of mobile stations, and
- the plurality of mobile stations is furthermore configured to define a predetermined cyclic transmission time.

8. Wireless communication system according to any one of Claims 1 to 6, wherein each mobile station is furthermore configured to define an acyclic transmission time, the system furthermore being configured such that:
- each mobile station is furthermore configured to transmit the plurality of copies of the data packet within a plurality of time intervals having a predetermined duration, and
- the first base station is furthermore configured to store the received data packets on the set of resources of the uplink channel, and
carry out the decoding, within a current time interval, based on the data packets received during the predetermined duration preceding the current time interval.

9. Wireless communication system according to any one of Claims 1 to 8, furthermore configured such that resources of the uplink channel are dedicated to the transmission of transmission codes, and that:
- the first base station is furthermore configured to receive at least one transmission code from the plurality of mobile stations on the dedicated resources of the uplink channel, and
determine, based on the received transmission code, the mobile station for which subsequent transmission is intended,
- each mobile station is furthermore configured to transmit the received transmission code to the first base station on the dedicated resources of the uplink channel before the transmission of the plurality of copies of the data packet.

10. Wireless communication system according to any one of Claims 1 to 9, furthermore configured such that:
- the first base station is furthermore configured to decode, for each mobile station, a combination of all or some of the resources of the associated sequence.

11. Wireless communication system according to any one of Claims 1 to 10, furthermore configured such that:
- the first base station is furthermore configured to apply a successive interference-cancelling technique depending on the associated sequence after the decoding.

12. Base station (110) for establishing a latency-critical service with a plurality of mobile stations (120), each mobile station being configured to communicate with the base station via a contention-based multiple-access uplink channel (130) without prior resource reservation, the uplink channel comprising a plurality of resources, the base station comprising:
- a computing unit (114) for decoding, for each mobile station, at least one resource depending on an associated specific sequence (S1, S2, S3, S4), the associated sequence defining
a portion of the plurality of resources of the uplink channel, and
the resources on which each mobile station is furthermore configured to transmit a plurality of copies of a data packet to the base station.

13. Base station according to Claim 12, wherein the computing unit is furthermore configured to determine the associated sequence for each mobile station, the base station furthermore comprising a transmission unit (111) for transmitting the associated sequence to each mobile station.

14. Base station according to Claim 13, wherein the computing unit is furthermore configured to determine the sequence associated with each mobile station using a method for determining sequences complying with at least one condition whereby a single resource is common between two sequences.

15. Mobile station (120) for establishing a latency-critical service with a base station (110) via a contention-based multiple-access uplink channel (130) without prior resource reservation, the uplink channel comprising a plurality of resources, the mobile station comprising:
- a transmission unit (121) for transmitting a plurality of copies of a data packet to the base station depending on a specific sequence associated with the mobile station, the associated sequence defining a portion of the plurality of resources of the uplink channel, the association between the mobile station and the associated sequence being known to the base station.

16. Wireless communication method (300), implemented by a base station, for establishing a latency-critical service with a plurality of mobile stations (120), each mobile station being configured to communicate with the base station via a contention-based multiple-access uplink channel (130) without prior resource reservation, the uplink channel comprising a plurality of resources, the method comprising the following steps:
- associating (340) each mobile station with a specific sequence defining a portion of the plurality of resources of the uplink channel,
- receiving (350), from each mobile station, a plurality of copies of a data packet depending on the associated sequence, and
- decoding (360), for each mobile station, at least one resource depending on the associated sequence.

17. Method according to Claim 16, wherein a sequence specific to each mobile station is determined using a method for determining sequences complying with at least one condition whereby a single resource is common between two sequences.

18. Method according to Claim 17, wherein the method for determining sequences determines a number n1*n2 of sequences by combining a first set of n1 sequences comprising s resources chosen from a number m=n/k of resources and complying with the condition whereby a single resource is common between two sequences with a second set of n2=k*k sequences comprising s resources from a number k*s of resources so as to form sequences comprising s resources from n resources, where k is a prime number greater than or equal to s-1.
